# EUROPEAN PATENT APPLICATION

(11) **EP 2 166 636 A2**
(43) Date of publication of application: **24.03.2010**
(21) Application number: 09170754.7
(22) Date of filing: 18.09.2009
(51) Int. Cl.: H02J 1/14, H02J 3/14

(54) **Control method and unit of an electric system for supplying power/electric current to sockets for the passengers of an aircraft**

(30) Priority: 19.09.2008 IT BO20080576
(71) Applicant: Superjet International S.p.A., Venezia (IT)
(72) Inventor: Galasso, Franco, 00139 Roma (IT)
(74) Representative: Jorio, Paolo

(57) **Abstract**

Control method and unit (10) of an electric system (7) for supplying power/electric current to sockets (9) for the passengers of an aircraft (1); the method comprises the steps of: setting a maximum power/electric current deliverable to the sockets (9); cyclically detecting the power/electric current absorbed by the sockets (9); if the power/electric current absorbed by the sockets (9) is higher than the maximum power/electric current, disconnecting one or more sockets (9) from the electric supply until the power/electric current absorbed by the sockets (9) is lower than the maximum power/electric current; if the power/electric current absorbed by the sockets (9) is remarkably lower than the maximum power/electric current, connecting again one or more sockets (9) from the electric supply until the power/electric current absorbed by the sockets (9) is close to the maximum power/electric current; and periodically varying the sockets (9) connected/disconnected to/from the electric supply so that each socket (9) is connected to the electric supply for a first period of time (Tₒₙ) and is disconnected from the electric supply for a second period of time (T_{off}).

## Description

### TECHNICAL FIELD

The present invention relates to a control method and unit of an electric system for supplying power/electric current to sockets for the passengers of an aircraft.

The present invention is advantageously applied to a passenger airplane to which explicit reference will be made in the following description without therefore loosing in generality.

### PRIOR ART

During scheduled flights of a passenger airplane, an ever increasing number of passengers use their own portable electronic devices (laptop computers, audio file players, DVD players, PDAs, etc.) for work or amusement; these portable electronic devices are supplied by rechargeable batteries which may have limited autonomy and thus not sufficient to cover the whole flight duration. Therefore, more and more passengers require the availability of electric sockets for recharging their portable electronic devices when flying. However, the passengers' request to have available electric sockets clashes with the limitation of the electric power being available aboard civilian airplanes (i.e. the electric power which may be used by passengers because it is not used by other onboard services), particularly in the case of medium-sized airplanes (e.g. adapted to carry about 80-120 people). In other words, the electric power being very limited, it is difficult to make electric sockets available to passengers because a very low number of passengers simultaneously using the electric sockets would be sufficient to saturate the available electric power and thus cause the tripping of the electric safety switches which disconnect the electric sockets from the electric supply in order to prevent the airplane current generators from being overloaded.

In order to obviate the afore-described drawback, either the electric power generated aboard the airplane should be increased, but such a solution is not feasible because it would require redesigning the engine system, or otherwise a very small number of electric sockets should be installed aboard, but such a solution would create considerable complications in using the electric sockets themselves and dissatisfaction for a large number of users who would be excluded from the service.

### DESCRIPTION OF THE INVENTION

It is an object of the present invention to provide a control method and unit of an electric system for supplying power/electric current to sockets for the passengers of an aircraft, which control method and unit are free from the above-described drawbacks, at the same time are easy and cost-effective to be implemented, and in particular during the flight, allow to electrically supply a high number of passengers' portable electronic devices while employing a limited electric power.

According to the present invention, a control method and unit of an electric system for supplying power/electric current to sockets for the passengers of an aircraft are provided as claimed in the appended claims.

### BRIEF DESCRIPTION OF THE DRAWINGS

The present invention will now be described with reference to the accompanying drawings, which illustrate a non-limitative embodiment thereof, in which:
- figure 1 is a diagrammatic plan view with parts removed for clarity of an airplane provided with an auxiliary electric system for supplying power/electric current to sockets for passengers, which is controlled by a control unit provided according to the present invention;
- figure 2 is a diagrammatic cross section view with parts removed for clarity of a passenger compartment of the airplane in figure 1;
- figure 3 is a scheme of the auxiliary electric system of the airplane in figure 1;
- figure 4 is an enlarged view of a distribution panel of the auxiliary electric system of the airplane in figure 1; and

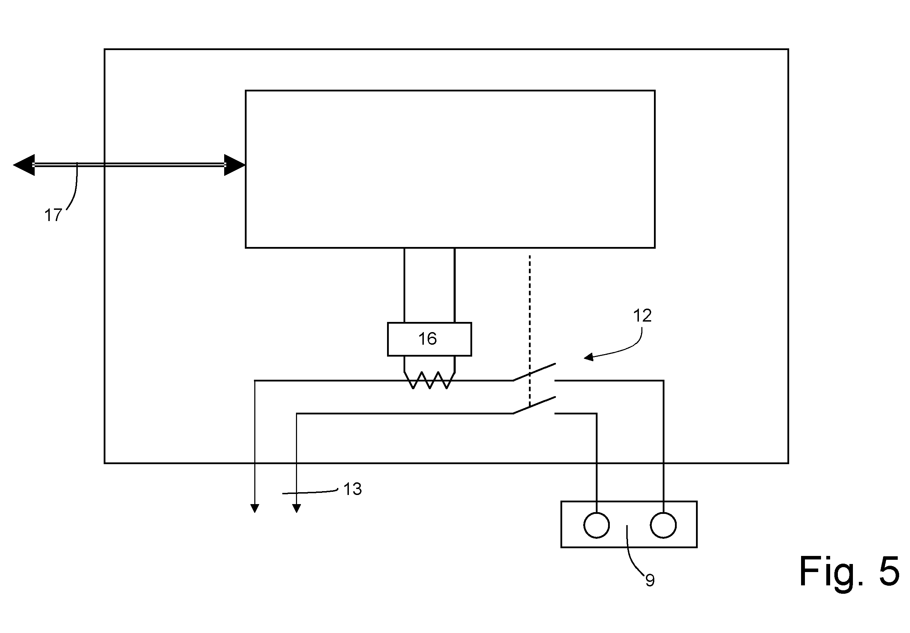

- figure 5 is an enlarged view of an electric socket of the auxiliary electric system of the airplane in figure 1.

### PREFERRED EMBODIMENTS OF THE INVENTION

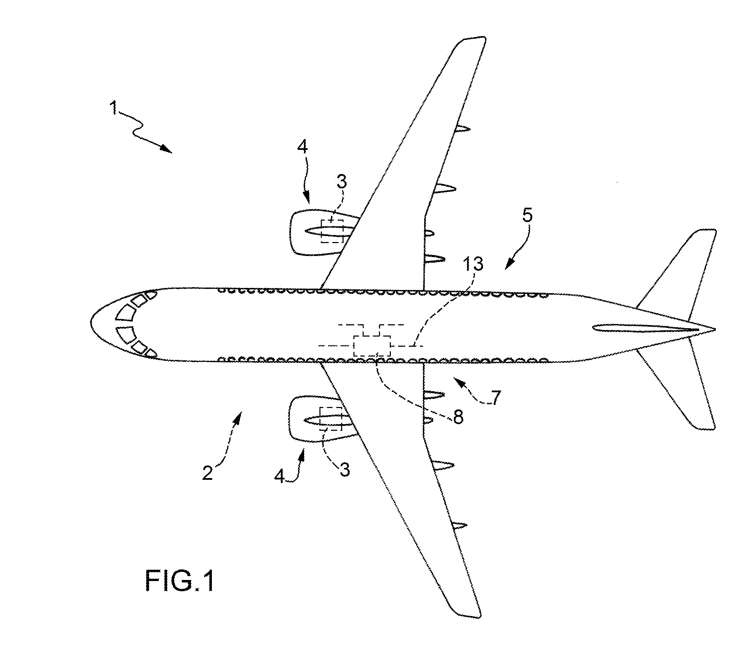

In figure 1, numeral 1 indicates as a whole a civilian passenger airplane which comprises a main electric system 2 which supplies power/electric current to all the onboard electric appliances and is supplied by a pair of electric generators 3 mechanically coupled to the two engines 4.

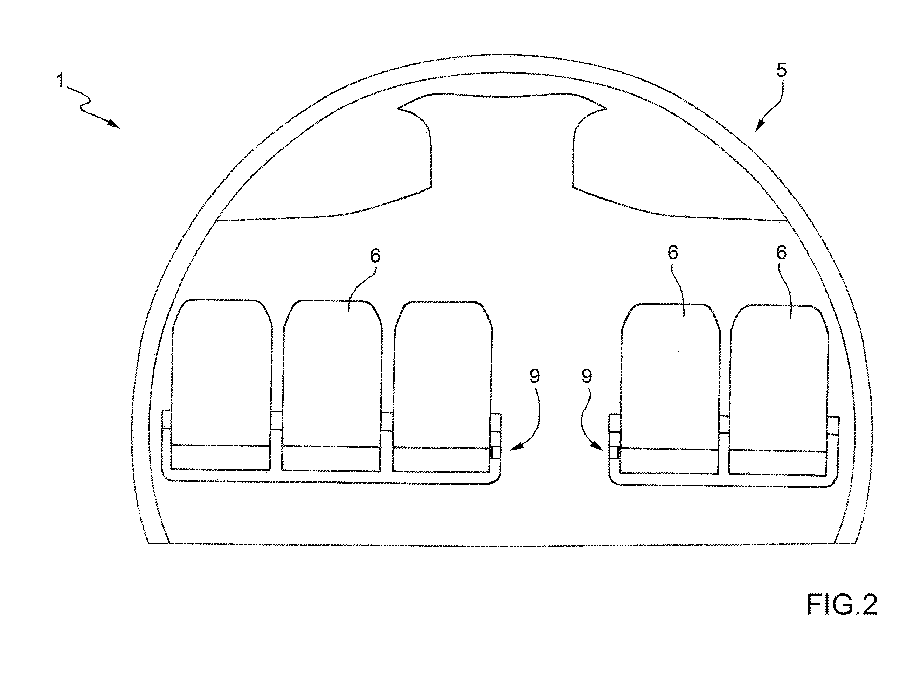

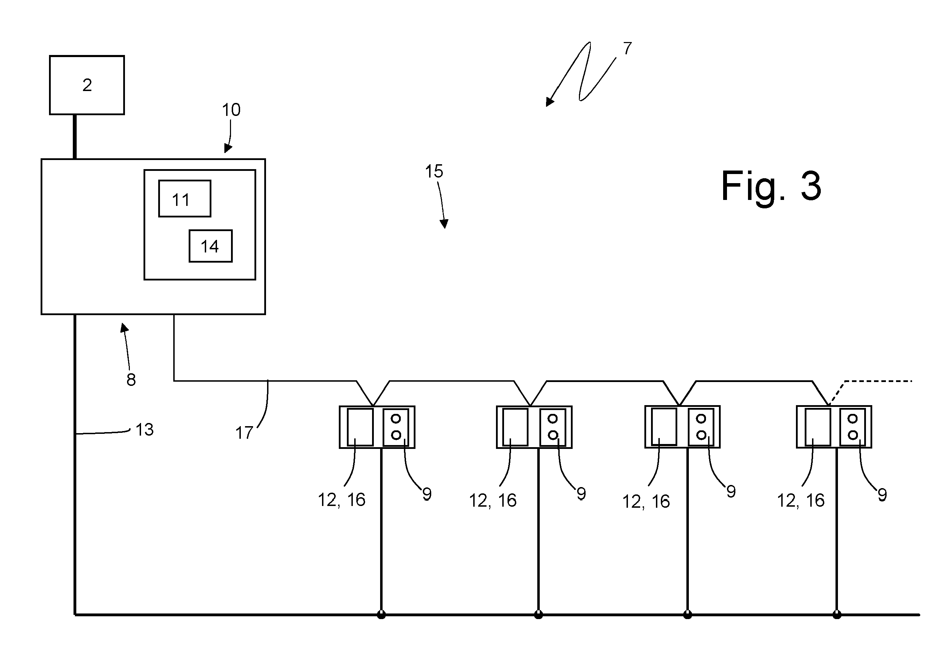

Airplane 1 comprises a passenger compartment 5 in which a plurality of seats 6 (shown in figure 2) distributed on several rows are arranged, and an auxiliary electric system 7, which is electrically supplied from the main electric system 2 and is intended to provide the passengers with the possibility of recharging their portable electronic devices when flying. As shown in figure 3, the auxiliary electric system 7 comprises a distribution panel 8 connected to the main electric system 2 and a plurality of sockets 9, which are electrically connected to the distribution panel 8 and distributed between the seats 6 (as shown in figure 2, for example); by way of example, there could be one socket 9 for each row of seats 6, one socket for each group of seats 6 (as shown by way of example in figure 2), or one socket for each seat 6 (e.g. a higher density of sockets 9 may be provided at the area of "business" seats 6 as compared to the area of "economy" seats 6).

As shown in figure 3, the auxiliary electric system 7 is provided with a control unit 10, which comprises a processing device 11 which is accommodated in the distribution panel 8 and a plurality of switches 12, which are remotely controlled by the processing device 11 and are arranged along the electric power lines 13 which supply the sockets 9. According to a preferred embodiment shown in the accompanying figures, a switch 12 is provided for each socket 9 and in this case each switch 12 is arranged at the corresponding socket 9 (in particular integrated in the same supporting body as the socket 9); alternatively, a limited number of switches 12 could be provided, each of which is associated with a group of sockets 9 (i.e. each switch 12 supplies several sockets 9), and in this case the switches 12 could either be distributed in the passenger compartment 5 or could all be accommodated inside the distribution panel 8.

The processing device 11 is connected to a memory device 14 in which a maximum power/electric current deliverable to the sockets 9 is stored, i.e. the amount of power/electric current generated by the electric generators 3 and is not absorbed by the other onboard electric appliances. It is worth noting that since the electric voltage of the auxiliary electric system 7 is substantially constant, the electric power and the electric current are equivalent to each other; furthermore, the onboard load power factor being approximately constant and close to 1, either the active power (measured in Watts) or the apparent power (measured in VA) may be considered.

The processing device 11 is connected to a sensor device 15 for cyclically detecting the power/electric current absorbed by the sockets 9; the sensor device 15 preferably comprises a power/electric current detector 16 for each switch 12 and the various detectors 16 are connected to the processing device 11 by means of a BUS line 17, which may be either physically separate from the electric power lines 13, as shown in figure 2, or may physically coincide with the electric power lines 13 by using the conveyed wave technology. Normally, each power/electric current detector 16 is an ammeter which detects the intensity of the electric current (which, as previously mentioned, is an equivalent of the electric power in this type of applications).

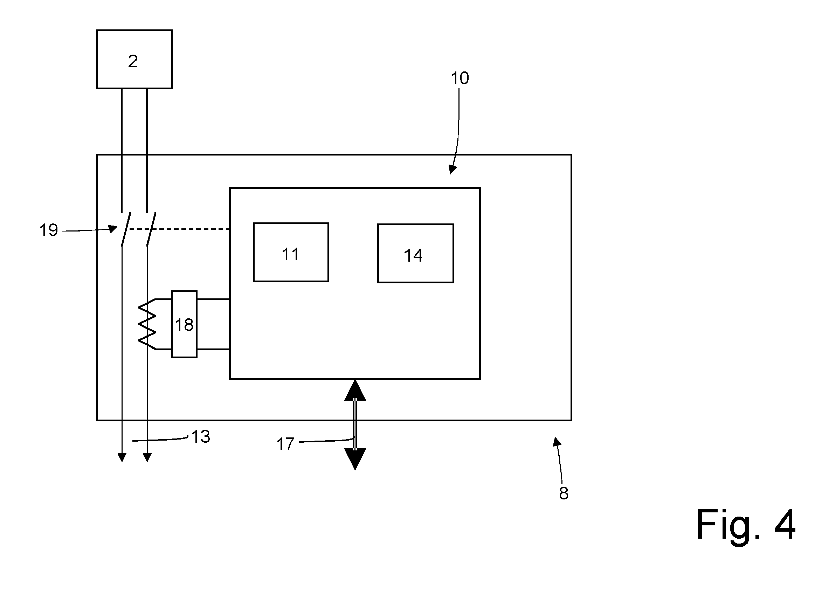

Furthermore, as shown in figure 4, the sensor device 15 comprises a further master power/electric current detector 18, which detects the total power/electric current absorbed by all sockets 9 immediately downstream of the main electric system 2. Finally, as shown in figure 4, a master switch 19 is provided, which is controlled by the processing device 11 and is adapted to interrupt the electric supply to the distribution panel 8.

The operation mode of the control unit 10 for supplying all sockets 9 having a limited available electric power is described below.

When the electric supply service provided by the auxiliary electric system 7 is not delivered (typically during the takeoff or landing, when the use of personal electronic devices aboard airplane 1 is not allowed), all sockets 9 are disconnected from the electric power supply by acting on the switches 12, which are all opened (the master switch 19 may also be opened for greater safety purposes). When the delivery of the electric supply service provided by the auxiliary electric system 7 starts (i.e. after the takeoff when the cruising step begins), the sockets 9 are connected to the electric supply by closing the switches 12; closing the switches 12, i.e. connecting the sockets 9 to the electric supply, is preferably sequentially performed waiting for a given period of time between the closing of one switch 12 and the closing of the next switch 12 (i.e. between the connection of one socket 9 or group of sockets 9 to the electric supply and the connection of a further socket 9 or further group of sockets 9 to the electric supply). Thereby, the increase of total power/electric current absorbed by all sockets 9 during the activation of the electric supply service provided by the auxiliary electric system 7 may be monitored.

It is worth noting that the electric supply service provided by the auxiliary electric system 7 is a low-importance service (i.e. a low-priority service) as compared to the other onboard electric appliances, and thus only the amount of power/electric current which is generated by the electric generators 3 of airplane 1 and which is not absorbed by the other onboard electric appliances is reserved for the auxiliary electric system 7. For example, while heating meals when onboard electric ovens are used (typically microwave ovens), the maximum power/electric current deliverable to the sockets 9 is decreased.

The power/electric current deliverable by the electric generators 3 of airplane 1 is cyclically determined, the power/electric current absorbed by all electric appliances of airplane 1 is cyclically measured (obviously by excluding the auxiliary electric system 7), and the maximum power/electric current deliverable to the sockets 9 is cyclically determined according to the difference between power/electric current deliverable by the electric generators 3 of airplane 1 and the power/electric current absorbed by all the electric appliances of airplane 1. The updated value of the maximum power/electric current deliverable to the sockets 9 is stored in the memory device 14 so as to be made available to the processing device 11. It is worth noting that the above-described steps for calculating the maximum power/electric current deliverable to the sockets 9 may be carried out either by the processing device 11 or by a different processing device of the main electric system 2.

Once the electric supply service provided by the auxiliary electric system 7 has been activated, the processing device 11 determines which sockets 9 are active or in use (i.e. the sockets 9 which have a non-null power/electric current absorption and therefore which are actually used by passengers). The processing device 11 removes a previously active socket 9 from the group of active sockets 9 if the absorption of power/electric current of socket 9) remains null for a period of time longer than a threshold value (e.g. a ten of seconds) when socket 9 is connected to the electric supply.

Furthermore, once the electric power service provided by the auxiliary electric system 7 has been activated, if the power/electric current absorbed by the sockets 9 is higher than the maximum power/electric current, the processing device 11 disconnects one or more active sockets 9 from the electric supply by using the corresponding switches 12 until the power/electric current absorbed by the sockets 9 is lower than the maximum power/electric current. If the power/electric current absorbed by the sockets 9 is remarkably lower than the maximum power/electric current, the processing device 11 connects again one or more active sockets 9 to the electric supply by using the corresponding switches 12 until the power/electric current absorbed by the sockets 9 is close to the maximum power/electric current.

In order to attempt to provide a certain amount of electric energy to all active electric sockets 9, the processing device 11 periodically varies the active sockets 9 connected/disconnected to/from the electric supply by using the corresponding switches 12 so that each socket 9 is connected to the electric supply for a period of time Tₒₙ and is disconnected from the electric supply for a period of time T_{off}.

According to a possible embodiment, for each socket 9 the processing device 11 sets the supply ratio R between the period of time Tₒₙ and the period of time Toff (i.e. R = Tₒₙ / Toff) and decides to connect/disconnect each socket 9 to/from the electric supply according to the corresponding supply ratio R between the period of time Tₒₙ and the period of time Toff. In particular, the processing device 11 decides to connect/disconnect the sockets 9 to/from the electric supply aiming at obtaining an approximately equivalent supply ratio R between the period of time Tₒₙ and the period of time Toff for all sockets 9. For example, the processing device 11 calculates the average supply ratio R between the period of time Tₒₙ and the period of time Toff for all sockets 9, disconnects from the electric supply the sockets 9 which have a supply ratio R between the period of time Tₒₙ and the period of time Toff higher than the average supply ratio R, and connects to the electric supply the sockets 9 which have a supply ratio R between the period of time Tₒₙ and the period of time Toff lower than the average supply ratio R to the electric supply.

According to a possible embodiment, the sockets 9 may be split into a group of privileged sockets 9, (e.g. the sockets 9 in the area of "business" seats 6) and into a group of standard sockets 9 (e.g. the sockets 9 in the area of "economy" seats 6); the processing device 11 could only disconnect the sockets 9 belonging to the group of standard sockets 9 from the electric supply, or could establish the modes of connecting/disconnecting the sockets 9 so that the sockets 9 belonging to the group of standard sockets 9 have a lower supply ratio R between the period of time Tₒₙ and the period of time T_{off} than that of the sockets 9 belonging to the group of privileged sockets 9.

Following to previous description, when the available resources (i.e. the maximum power/electric current deliverable to the sockets 9) are sufficient for all passengers who require electric supply (i.e. for all the active sockets 9), in other words when the power/electric current absorbed by the active sockets 9 is lower than the maximum power/electric current, all passengers who require electric supply for their appliances are always satisfied (i.e. all the active sockets 9 remain always connected to the electric supply). On the other hand, when the available resources (i.e. the maximum power/electric current deliverable to the sockets 9) is not sufficient for all passengers who require electric supply (i.e. for all active sockets 9), in other words when the power/electric current absorbed by the active sockets 9 is higher than the maximum power/electric current, then the processing device 11 attempts to split the available resources (i.e. the maximum power/electric current deliverable to the sockets 9) among all the passengers who require electric supply. As the electric power may not be fractioned (i.e. if a battery charger needs to absorb 50 Watts, it cannot be supplied with only 25 Watts), the electric energy is fractioned (i.e. the product of electric power by time); for example, if a battery charger must absorb 50 Watts, it may not be supplied with only 25 Watts, but 50 Watts may be supplied to the battery charger for 30 minutes every hour instead of 60 minutes every hour (in this case, the period of time Tₒₙ is equal to the period of time T_{off} and the supply ratio R is 1). Therefore, the processing device 11 keeps each active socket 9 connected to the electric supply for a period of time Tₒₙ and disconnected from the electric supply for a period of time T_{off} aiming at obtaining an approximately equivalent supply ratio R between the period of time Tₒₙ and the period of time T_{off} for all sockets 9.

The above-described strategy is effective and efficient (i.e. winning), because all portable electronic devices (laptop computers, audio file players, DVD players, PDAs, etc.) used by the passengers of aircraft 1 are provided with rechargeable batteries and therefore, for the correct operation of these portable electronic devices for an extended period of time, an absolute continuity of the electric supply to the respective battery chargers connected to the sockets 9 is not necessary, but it is sufficient that each battery charger connected to a socket 9 receives electric supply for a certain fraction of the period of use (it is however allowable and in some way even expected by passengers, that at the end of the flight the batteries of their portable electronic devices will be more discharged than at the beginning of the flight). In other words, by exploiting the electric energy stored and storable in the batteries of the passengers' portable electronic devices, the available resources (i.e. the maximum power/electric current deliverable to the sockets 9) may be fractioned so as to provide approximately the same amount of the available resources to all the portable electronic devices connected to the sockets 9.

The above-described control unit 10 has many advantages because it is simple and cost-effective to be implemented, has a limited number of components, each of which is light in weight and small in size (and thus may be easily installed aboard an aircraft), and especially when flying, allows to electrically supply a high number of passengers' portable electronic devices while using a limited electric power which varies over time.

## Claims

1. Control method of an electric system (7) for supplying power/electric current to sockets (9) for the passengers of an aircraft (1); the control method comprises the following steps:
setting a maximum power/electric current deliverable to the sockets (9);
cyclically detecting the power/electric current absorbed by the sockets (9);
disconnecting, if the power/electric current absorbed by the sockets (9) is higher than the maximum power/electric current, one or more sockets (9) from the electric supply until the power/electric current absorbed by the sockets (9) is lower than the maximum power/electric current;
connecting again, if the power/electric current absorbed by the sockets (9) is remarkably lower than the maximum power/electric current, one or more sockets (9) to the electric supply until the power/electric current absorbed by the sockets (9) is close to the maximum power/electric current; and
periodically varying the sockets (9) connected/disconnected to/from the electric supply so that each socket (9) is connected to the electric supply for a first period of time (Tₒₙ) and is disconnected from the electric supply for a second period of time (T_{off}).

2. Control method according to Claim 1, further comprising the following steps:
setting for each socket (9) the supply ratio (R) between the first period of time (Tₒₙ) and the second period of time (T_{off}); and
connecting/disconnecting each socket (9) to/from the electric supply according to the corresponding supply ratio (R) between the first period of time (Tₒₙ) and the second period of time (T_{off}).

3. Control method according to Claim 2, further comprising the step of connecting/disconnecting the sockets (9) to/from the electric supply with the aim of having for all sockets (9) an approximately similar supply ratio (R) between the first period of time (Tₒₙ) and the second period of time (T_{off}).

4. Control method according to Claim 3, further comprising the following steps:
calculating the average supply ratio (R) between the first period of time (Tₒₙ) and the second period of time (T_{off}) for all sockets (9);
disconnecting from the electric supply the sockets (9) having a supply ratio (R) between the first period of time (Tₒₙ) and the second period of time (T_{off}) higher than the average supply ratio (R); and
connecting to the electric supply the sockets (9) having a supply ratio (R) between the first period of time (Tₒₙ) and the second period of time (T_{off}) lower than the average supply ratio (R).

5. Control method according to one of Claims 1-4, further comprising the following steps:
cyclically setting the power/electric current deliverable by the electric generators (3) of the aircraft (1);
cyclically measuring the power/electric current absorbed by all electric appliances of the aircraft (1); and
cyclically calculating the maximum power/electric current deliverable to the sockets (9) according to the difference between the power/electric current deliverable by the electric generators (3) of the aircraft (1) and the power/electric current absorbed by all electric appliances of the aircraft (1).

6. Control method according to any one of Claims 1-4, further comprising the following steps:
dividing the sockets (9) in a group of privileged (9) sockets (9) and a group of standard sockets (9); and
disconnecting from the electric supply only the sockets (9) belonging to the group of standard sockets (9).

7. Control method according to any one of Claims 1-6, further comprising the following steps:
dividing the sockets (9) in a group of privileged (9) sockets (9) and a group of standard sockets (9); and
defining the connected/disconnected modes for the sockets (9) so that the sockets (9) belonging to the group of standard sockets (9) have a supply ratio (R) between the first period of time (Tₒₙ) and the second period of time (T_{off}) lower than the sockets (9) belonging to the group of privileged sockets (9).

8. Control method according to any one of Claims 1-7, further comprising the following steps:
measuring the absorption of power/electric current of each socket (9) for determining whether the socket (9) is in use or not; and
disconnecting from the electric supply only the sockets (9) in use.

9. Control method according to any one of Claims 1-8, further comprising the following steps:
disconnecting all sockets (9) from the electric supply when the electric supply is not delivered,; and
at the beginning of delivery of electric supply, connecting in succession the sockets (9) to the electric supply, setting a determined waiting period of time between the connection of a socket (9) or of a group of sockets (9) to the electric supply and the connection of a further socket (9) or of a further group of sockets (9) to the electric supply.

10. Control method according to any one of Claims 1-9, further comprising the following steps:
prearranging a number of remote-controlled switches (12), each of them being associated to a socket (9) or to a group of sockets (9); and
prearranging a power/electric current detector (16) for each switch (12).

11. Control method according to any one of Claims 1-10, further comprising the following steps:
detecting the active sockets (9), namely the sockets (9) showing a not null power/electric current absorption; and
disconnecting/connecting from/to the electric supply only the active sockets (9).

12. Control method according to Claim 11, further comprising the step of subtracting a previously active socket (9) from the group of the active sockets (9) if the power/electric current absorption of that socket (9) remains null for a period of time longer than a threshold value when the socket (9) is connected to the electric supply.

13. Control unit (10) of an electric system (7) for supplying power/electric current to sockets (9) for the passengers of an aircraft (1); the control unit comprises:
a memory device (14) for storing a maximum power/electric current deliverable to the sockets (9);
a sensor device (15) for cyclically detecting the power/electric current absorbed by the sockets (9);
a remote-controlled switch (12) for each socket (9) or for each group of sockets (9); and
a processing device (11) which, if the power/electric current absorbed by the sockets (9) is higher than the maximum power/electric current, disconnects one or more sockets (9) from the electric supply by using the relative switches (12) until the power/electric current absorbed by the sockets (9) is lower than the maximum power/electric current; if the power/electric current absorbed by the sockets (9) is remarkably lower than the maximum power/electric current, connects again one or more sockets (9) to the electric supply by using the relative switches (12) until the power/electric current absorbed by the sockets (9) is close to the maximum power/electric current; and periodically varies the sockets (9) connected/disconnected to/from the electric supply by using the relative switches (12) so that each socket (9) is connected to the electric supply for a first period of time (Tₒₙ) and is disconnected from the electric supply for a second period of time (T_{off}).

14. Control unit according to claim 13, wherein the sensor device (15) comprises a power/electric current detector (16) for each switch (12).
